# EUROPEAN PATENT APPLICATION

(11) **EP 4 067 015 A1**
(43) Date of publication of application: **05.10.2022**
(21) Application number: 21386062.0
(22) Date of filing: 18.10.2021
(51) Int. Cl.: B25J 15/00, A01D 46/30

(54) **ROBOTIC END-EFFECTOR TOOL FOR SIMULANEOUS CUTTING AND HOLDING OF AN OBJECT WITH APPLICATION IN PRECISION AGRICULTURE AND PARTICULARY IN VITICULTURE**

(30) Priority: 29.03.2021 GR 20210100199
(71) Applicant: Special Account for Research Grants (SARG) of International Hellenic University (IHU), 57001 Thermi, Thessaloniki (GR)
(72) Inventor: KABURLASOS, Vassilis, Pylaia-Hortiatis (GR); PACHIDIS, Theodore, 65403, Kavala (GR); PAPAKOSTAS, George, 67133, Xanthi (GR)

(57) **Abstract**

The invention is related to the technical field of mechanical and electrical engineering with application in agriculture. The invention concerns a robotic end-effector tool that can simultaneously cut and hold fruits/branches with adaptive manner. It is a cutting and holding mechanism (CUHOM) consisting of suitably shaped fingers (FI) and bars (BA) attached to the fingers through springs of suitable stiffness (SP), creating two finger elements (FB) and a cutting pair of scissors (SC) attached to the finger elements (FB). The CUHOM holds the object with the finger elements (FB), and gradually closes the pair of scissors that cuts the object, without opening the finger elements (FB) so that the object is cut and removed/collected safely. The design of the system allows holding and cutting even short objects. The previous tasks are driven by a single drive system. The original construction is intended to help automate viticultural practices, such as harvesting.

## Description

### Definition of the technical field of the invention.

The invention is related to the technical field of mechanical and electrical engineering with application in precision agriculture and particularly in viticulture. Specifically, it refers to an extension of a robotic arm (end effector) or simply from now on "tool" of the robotic arm (arm tool), that is mounted on a robotic gripper and it is a cutting and holding mechanism (CUHOM) consisting of appropriately formed fingers, bars and a cutting pair of scissors. CUHOM can perform simultaneous cutting and holding of an object in an adaptive way. The invention (CUHOM) finds application in viticultural works and in particular in harvest and green harvest, in order to automate these works with robots. With appropriate modifications, the invention may be utilized to agricultural fruit and vegetable harvesting operations in general.

### Reference to the prior state-of-the-art by indicating the disadvantages, which the invention is to correct.

Agricultural robots perform a variety of tasks that involve moving and handling natural objects. A typical agricultural mobile robot may, for example, have one or more robotic arms, at the end-effector of which special tools are mounted on, allowing the robot to pick up objects from a specific location, to transport them to a destination, for example, placement in boxes/crates at a destination place for harvesting e.g., agricultural products. The present invention concerns a robotic end-effector tool (CUHOM) with application in viticulture.

Today's robotic end-effectors and tools mounted on mainly use motors and gear systems, which have increased movement complexity. Prior techniques refer to cutting systems in agricultural applications, but without mentioning the technique of simultaneous holding and cutting with application in viticulture, such as in robotic harvesting applications where in order to cut a grape bunch, its stem must be held and cut at the same time so that the cut bunch to be placed subsequently by the robotic arm in a harvest basket.

There are techniques that suggest robotic end-effector tools, which achieve fruit/vegetable holding and cutting by rotating the crop until its stem is cut off. This kind of techniques is applicable to only certain types of fruit (e.g., peppers, apples), of special shape/dimensions and the corresponding robotic end-effector tools cannot be utilized to fruits of different dimensions. Other techniques suggest systems of robotic end-effector cutting tools that do not have the ability to simultaneously hold the object, allowing it to fall down. Any addition of a holding mechanism would be an additional subsystem, which would have to move independently of the cutting subsystem, using an additional driving mechanism. As a holding technique in agricultural applications, suction is also mentioned, where suction based robotic end-effectors are proposed to hold the cut fruit. These techniques only work with fruits that are compact and allow the suction device to contact the surface of the fruit.

Consequently, there is a need for robotic end-effector tools that could respond more flexibly to their environment and can perform holding and cutting at the same time (lower cost due to fewer drive mechanisms), but also can be configured to perform these tasks depending on the problem they are going to solve.

The CUHOM operates using a single motor and can simultaneously hold the object and cut it at a short distance from the holding point. CUHOM can be adapted to the dimensions of the object it holds and therefore it is not binding on a specific size/shape of objects that can hold and cut, with reference to objects related to viticulture such as leaf/bunch stems, branches, etc., as well as, the application of CUHOM in other crops that need appropriate treatment, e.g., cutting from the stem and holding various fruits /vegetables or leaves/branches, etc.

### Brief presentation of the invention as defined by the claims.

The features of the invention are defined in the claims.

The CUHOM consists of the following basic parts: (1) two symmetrical fingers (FI) connected on the fingers of a robotic gripper, (2) two symmetrical bars (BA) connected on the fingers (FI) of the CUHOM, through an equal number of holes present on the fingers and bars by means of springs, bolts and nuts (or other connecting elements) and (3) a pair of scissors attached to the base of the fingers by means of holes with bolts and nuts (or other connecting elements). A key feature of the invention is its ability to simultaneously cut and hold objects through a set of springs of suitable stiffness, in an adaptive manner.

CUHOM is a robotic end-effector tool, mounted on the end of a robotic two-finger gripper commercial or non-commercial. The robotic gripper is then mounted on a commercial or non-commercial robotic arm. The construction approach and the materials of these individual connecting pieces vary and depend on the selected robotic gripper and the robotic arm and are not part of the invention. CUHOM can also be made of different materials (e.g., metal or plastic) and in dimensions and proportions that vary depending on the nature of the problem.

The two symmetrical fingers of CUHOM at one end have a suitably formed base by means of which each finger of the invention (CUHOM) is connected to the corresponding finger of the robotic gripper through holes and connecting elements (e.g., bolts and nuts). At the other end the fingers have selected dimensions based on the problem (e.g., thinner ending and small in width to hold short / small objects, longer or shorter length depending on the desired force exerted by the fingers on the object will hold, different configuration depending on the size of the objects, etc.). The fingers (FI) have holes along them through which it is connected in parallel to each finger (FI) and from its inner side the corresponding bar (BA).

The two symmetrical bars (BA) have the same number of holes along the fingers (FI) to connect in parallel to them. The number of holes in fingers and bars is not binding and may vary depending on the nature of the problem.

The connection of the fingers with the bars is done through springs (SP). The springs (SP) are placed vertically between each finger (FI) and bar (BA) holding them together with the help of bolts (BO) and nuts (NU) or other connecting elements and creating a finger element (FB). The springs are as many as the holes in each finger (FI) or bar (BA) and must all be of the same stiffness. The value of stiffness can vary and depends on the nature of the problem.

The parallelism and the distance of each bar (BA) from the corresponding finger (FI) of CUHOM is ensured by the appropriate adjustment of the bolts and the nuts or the connecting elements.

The same stiffness in all springs allows the adaptive holding of objects between the bars, in the sense that the holding force exerted on the object is adjusted according to the dimensions of the object located between the bars.

For this application in viticulture, the holding force of the fingers increases as the thickness of the stem held in place increases so that the end-effector can hold even the heaviest grape bunches safely. The force exerted by each spring is calculated as a function of the spring displacement according to the relation F = kx, where k is the spring constant and x is the spring displacement. The cutting is achieved with a suitable cutting tool (pair of scissors). The two handles of pair of scissors (SC) are attached to the bases of the symmetrical fingers (FI) through holes with connecting elements (e.g., bolts (BO) and nuts (NU)). The length of the springs is adjusted so that when the fingers close and the bars hold the object by compressing the spring system, at the same time the pair of scissors close completely to cut the object being held.

The pair of scissors (SC) is placed above the fingers (FI), parallel to them and at the shortest possible distance from the surface of the fingers. In this way the total width of the invention at its end can be minimized and thus achieve a cut of corresponding length of objects, e.g., very short stems.

CUHOM holds the object with the compressed finger elements (FB) and at the same time gradually closes the pair of scissors (SC) for as long as the springs (SP) are compressed until the pair of scissors (SC) are completely closed and cuts the object without opening the fingers, so that the cut object to be held in order to be safely removed / collected. The two tasks of holding and cutting are driven by a single drive system (e.g., a gripper or a prototype mechanism based on the movement of a single actuator), which makes holding with finger elements (FB) and at the same time cutting with the help of a pair of scissors (SC) or a properly fitted cutting tool.

### Indication of the advantages of the invention.

The present invention can be adapted with minor modifications as an end-effector tool of any robotic arm, commercial or non-commercial. In addition, it can simultaneously hold and cut an object with a single drive system driven by a single motor. Holding is achieved with the force exerted by the finger elements (FB) with the help of springs of suitable stiffness. For the application in viticulture, a study has been made to maintain a short distance between the pair of scissors (SC) and the fingers (FI) so that it can be achieved by the invention to hold and cut short objects (short stems). In this application the aforementioned distance is 2 cm long. Choosing the right materials and depending on the nature of the problem can reduce this distance even more. Finally, the invention works in an adaptive manner, so that the greater the thickness of the object being held, the greater the holding force exerted by the finger elements (FB). In this way the robotic end-effector can hold with increasing force the increasingly thick and possibly heavier objects at their point of hold. In viticulture for example, a larger / heavier grape bunch with a thicker stem will be held by its stem with greater force from the CUHOM.

### Brief description of the numbered figures.

**FIGURE 1****.** Finger representation (FI) of the Cutting and Holding Mechanism (CUHOM). Front, top and side view with the dimensions of the original finger designed and manufactured in a 3D printer.
**FIGURE 2****.** Representation of a bar (BA) of the Cutting and Holding Mechanism (CUHOM). Front, top and side view with the dimensions of the original bar designed and manufactured in a 3D printer.
**FIGURE 3****.** One of two parts of the pair of scissors (PS) of CUHOM. The intermediate hole of the pair of scissors parts (PSH) is shown in the middle, as well as, the connecting hole of each pair of scissors part with one finger (FSH) at the end.
**FIGURE 4****.** Assembly of a finger (FI) of CUHOM with a bar (BA) through springs (SP) with the help of CSK head bolts (BO) and nylon self-locking nuts (NU) thus creating a finger element (FB). The figure also shows the base of the finger (FIB) of the finger (FI) attached to the finger of a robotic gripper, as well as, the finger hole (FSH) for connecting it to each part of pair of scissors (PSH).
**FIGURE 5****.** A finger (FI) CUHOM connected to a bar (BA) via springs (SP) with the help of CSK head bolts (BO) and nylon self-locking nuts (NU) (assembled). The figure shows the base (FIB) of the finger (FI) attached to the finger of a robotic gripper, as well as, the finger hole (FSH) for connecting it to each part of pair of scissors (PS).
**FIGURE 6.** a) Connection of the scissor (SC) - two identical scissors parts (PS) - with the two symmetrical elements (FB) of the Cutting and Holding Mechanism (CUHOM) with the help of bolts (SB1), (SB2) and nuts (SN2), (assembly). b) The Cutting and Holding Mechanism (CUHOM) in its final form. The holes (FBH) in the finger bases (FIB) of the finger elements (FB) are used to attach CUHOM to a robotic gripper. It also shows the minimum possible height of its ending (EH).

### The manner in which the invention can be industrially applied.

An invention is considered to be industrially applicable if its object can be manufactured or used in any industry, including agriculture.

The present invention (CUHOM) is the final tool of a robotic arm, i.e., it is a tool that adapts to the end-effector of a robotic arm, as part of a robot that aims to help automate two basic viticultural tasks: the green harvest and the harvest. CUHOM is the tool that can cut and hold a grape bunch at the same time.

Green harvest concerns the exclusion of unripe grapes, parts of them or individual berries in order to improve the relationship between leaf area and quantity of grapes. The choice of the specific part to be removed depends on the intended purpose and the properties of the variety (way of fruiting, size and shape of grapes). The harvest is the collection of all the grapes that have reached the desired degree of ripeness.

CUHOM can be manufactured and used in agriculture and specifically in the field of automated production, as a skillful cutting and holding tool, which adapts to any robotic arm and will automate agricultural work of various crops, not only viticultural, which require cutting and holding (e.g., defoliation, fruit picking, pruning, etc.).

### Detailed development of at least one way of realization of the invention using examples and reference to figures.

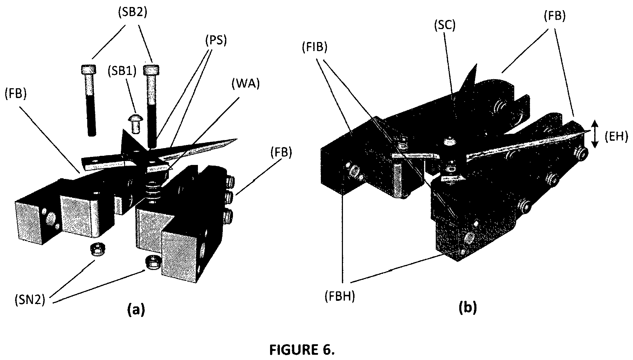

The CUHOM can be adjusted and adapted to any two-finger gripper depending on the cutting and holding needs with changes in the form of the fingers, the stiffness of the springs, the bars on the fingers and the cutting tool to be used. If commercial pair of scissors used in viticulture are used (thus allowing it to be easily maintained and replaced in the event of damage), this is modified accordingly so that it can be adapted to CUHOM. Care is taken to ensure that the overall height of the invention is at its minimum possible (EH) (in the original construction at 2 cm, FIGURE 6 (b)), which means that it can hold and cut stems at least (EH) cm long. The gripper closes and at the same time closes the pair of scissors (SC). The finger elements (FB) are intended to grip the stem long before the pair of scissors close completely and cut the stem, gradually exerting increasing force.

The thicker the object that the elements (FB) hold between them, the greater the force exerted by the springs on the bars and the better the restraint. The stiffness of the springs is determined depending on the application to ensure holding and cutting at the same time. The force exerted by each spring is calculated as a function of the spring displacement according to the relation F = kx, where k is the spring constant and x is the spring displacement. The maximum holding weight for the original construction was experimentally measured to be 1100 grams. The movements of the scissor and the fingers are not performed independently but are driven by the same motor or the same drive system (gripper).

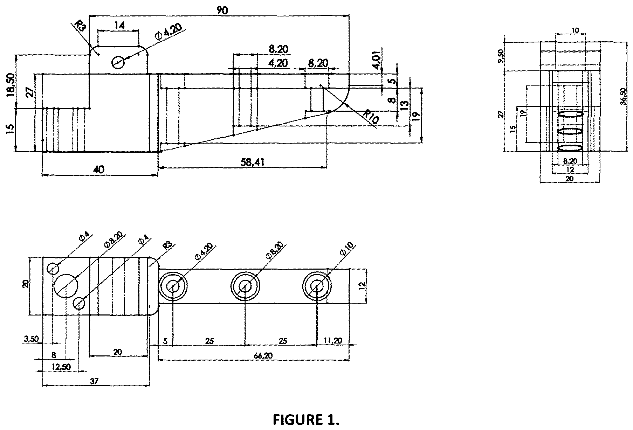

In order to implement a prototype model of the invention it is first necessary to create the 3D models of its individual parts, fingers and bars, using some 3D object design (CAD) software application. The digital model can then be printed on a 3D printer (application with PLA, ABS or other hard plastic with significant mechanical strength) or made of metal and / or other material depending on the nature of the problem (FIGURES 1, 2 and 3).

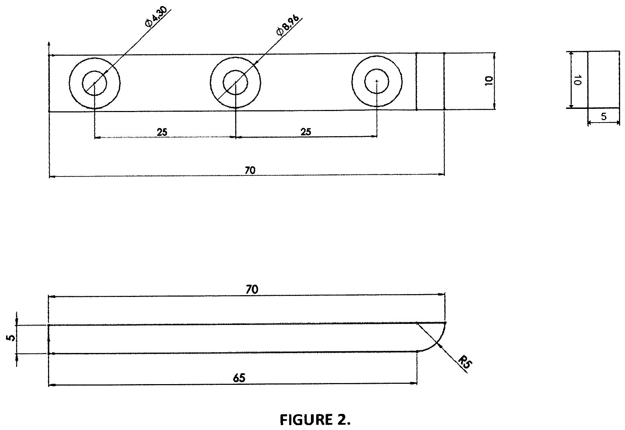

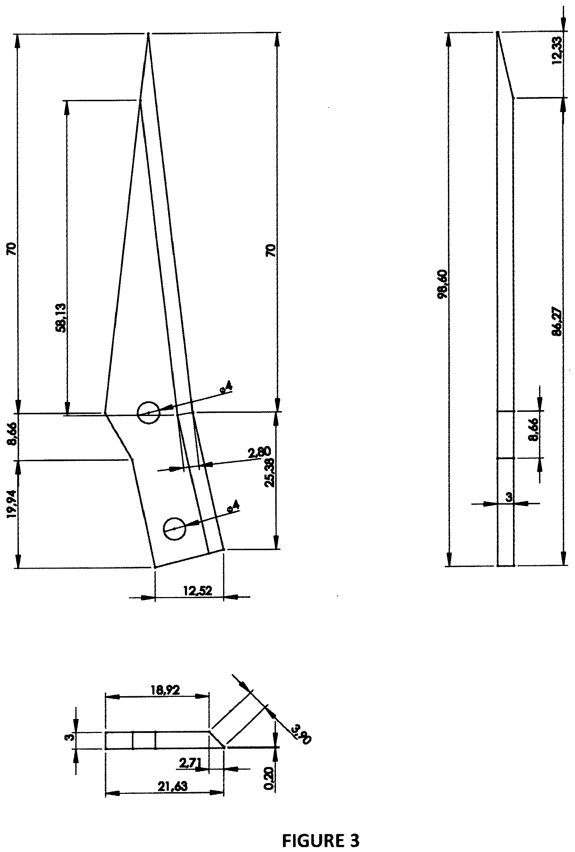

Two fingers (FI), (FIGURE 1), two bars (BA), (FIGURE 2) should be created and if a commercial product for use in viticulture is not used as scissors (SC), then create the two parts of a pair of scissors (PS), (FIGURE 3). The individual parts will then have to be assembled. This is done through the holes that have been created during the design and / or during the construction (depending on the material to be used), so that the bars (BA) can be held with the fingers (FI) through the springs of appropriate stiffness creating finger elements and the pair of scissors with the fingers through suitable connecting elements such as e.g., bolts and nuts.

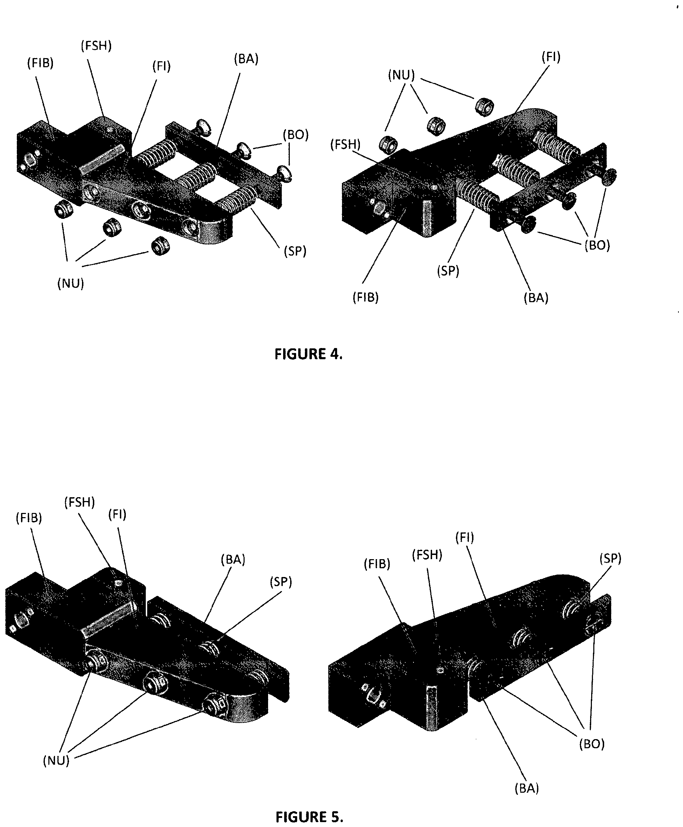

The assembly of a finger (FI) with a bar (BA) is shown in FIGURE 4 (two different views) to create a finger element (FB), while FIGURES 1 and 2 show the exact dimensions of the finger (FI) and the bar (BA) respectively in the original application. The CSK cap head bolts (BO) used are from stainless steel and have different lengths (dimensions in the original construction 4X30, 4X35, 4X40 mm) depending on the position in which they are placed on the assembled finger element (FB) (finger (FI) with bar (BA)). The nuts (NU) used are 4 mm nylon self-locking. The three springs (SP) used in each finger (FI) have a length of 20 mm, an outer diameter of 8 mm and a coefficient k = 0.465 Nt/mm.

The coefficient k for verification is measured with the help of a spring tester. The springs (SP) are placed in the corresponding sockets in the finger (FI). FIGURE 5 shows two different views of the assembled finger element (FB) after proper adjustment of the nuts (NU), so that the bar (BA) a) is parallel to the finger (FI) and b) the distance of the bar (BA) from the finger (FI) to allow the effective cutting and holding of an object by CUHOM. The adjustment of the nuts (NU) can then be improved when the CUHOM is placed in the robotic gripper.

To complete a prototype of CUHOM with the previous procedure, two elements (FB) of a finger (FI) with a bar (Σ) are created. The two parts of scissors (PS) are then assembled with the help of a 4 mm bolt (SB1) with a button cap head and the corresponding nylon self-locking nut - not shown in the Figure - or by creating a thread on one of the two parts or a suitable stainless-steel rivet, 4 mm, with a button cap head, in order to achieve the connection of the two parts of the pair of scissors without obstructing the movement of the elements (FB) of CUHOM (FIGURE 6 (a)). The pair of scissors (SC) created by the connection of the two parts of it (PS), (FIGURE 6 (a)), is connected with the help of two bolts (SB2) with a hexagon socket cap head (4X35) and the corresponding nylon self-locking nuts (SN2) with the elements (FB) of CUHOM.

In the original pair of scissors described previously, when connecting one of the two parts of the pair of scissors (PS) to one finger element (FB), a gap is created between the (PS) and the (FB). A number of stainless steel washers (WA) is placed to cover the gap with thickness equal to the thickness of the scissor part (PS). The nuts (SN2) are adjusted so that the movement of CUHOM elements (FB) and (SC) is free, without however allowing the vertical movement (zero gap) of pair of scissors (SC). The final result of the invention (CUHOM) after complete assembly is shown in FIGURE 6 (b). Holes at Fingers' base (FBH) are used in the original invention to connect the CUHOM with a commercial robotic gripper. The main ones (FBH) in the original application have a diameter of 8 mm. The connection to the robotic gripper is achieved with the help of only two 8 mm bolts (8X25) which allows easy connection and disconnection of the CUHOM on the robotic gripper, so that it is easy to change the tool as needed.

As mentioned above, any reference to dimensions and materials / construction features relates to the original construction, i.e., they are application features of the invention, are not restrictive and are subject to change. The invention concerns a robotic end-effector cutting and holding tool. Its operation is achieved by the force of a number of springs while a single motor, as defined in the claims, drives it. The invention can be implemented with different materials, be of different dimensions and design, the springs be of different stiffness, the distances of the fingers be different, and so on. However, the description of the invention uses the features of the original construction shown in the corresponding figures (FIGURES 1-6) and which can be used as a model.

## Claims

1. The cutting and holding mechanism (CUHOM) consists of the following basic parts: (1) two symmetrical fingers (FI) connected on the fingers of a robotic gripper, (2) two symmetrical bars (BA) connected on the symmetrical fingers (FI) of CUHOM through holes with the help of springs (SP), bolts (BO) and nuts (NU) creating two symmetrical finger elements (FB) and (3) a pair of scissors (SC) consisting of two scissor parts (PS) and adjusted at the base of the fingers (FIB) with bolts (SB2) and nuts (SN2) (or other connecting element). The main feature of the invention is the ability to simultaneously cut and hold objects with the help of a pair of scissors (SC) and symmetrical finger elements (FB).

2. CUHOM according to claim 1, the robotic gripper to which it is attached may be any two-finger robotic gripper commercial or non-commercial.

3. CUHOM according to claim 2, wherein the base of each finger (FIB) can be conveniently shaped for attachment to any robotic gripper.

4. CUHOM according to claim 1, wherein the symmetrical fingers (FI) and the bars (BA) can be made of any material (metal or plastic or other material that provides mechanical strength) and have a configuration and dimensions adapted to the nature of the problem and the characteristics of the selected gripper.

5. The CUHOM according to claim 1, whose springs (SP) are of the same stiffness and with a stiffness that can be selected depending on the nature of the problem.

6. The CUHOM according to claim 1 and 4, wherein each finger (FI) has a properly formed base (FIB) attached to the gripper fingers with bolts and nuts (or other connecting elements) and the configuration and dimensions of the fingers (FI) are determined according to the nature of the problem and the force that is desired to be exerted by the gripper fingers on the object to be grasped.

7. The CUHOM according to claim 1, 4 and 6, wherein along the fingers (FI) and the bars (BA) there are holes suitably shaped respectively, by means of which the corresponding bar (BA) with the help of springs (SP), CSK cap head bolts (BO) and nylon self-locking nuts (NU) is connected to each finger (FI) from its inner side creating two symmetrical finger elements (FB) and the system of two symmetrical finger elements (FB) is able to perform adaptive restrain of objects between the finger elements (FB).

8. The CUHOM according to claim 1 and 7, wherein the distance of each bar (BA) from the inside of the respective finger (FI) is adjusted by means of CSK cap head bolts (BO) of suitable length, nylon self-locking nuts (NU) (or other secure connection of the finger to the bar) and springs (SP), so that the bars (BA) are parallel along the fingers (FI) on the inside of the fingers (FI) and at a specified distance from them, where the number of holes, springs, bolts and nuts are determined by the nature of the problem.

9. The CUHOM according to claim 1, 7 and 8, wherein the bars (BA) have an equal number of holes with the holes that exist along the fingers, so that through them to connect and adjust each bar (BA) to be parallel to each finger (FI), when the two symmetrical finger elements (FB) created, connected to any robotic gripper, are not compressed.

10. The CUHOM according to claim 1, 7, 8 and 9, wherein the bars (BA) are connected in parallel along the fingers (FI) by springs (SP) of suitable stiffness placed vertically and between the fingers (FI) and the bars (BA), where the fingers (FI) and the bars (BA) are connected with the help of CSK head bolts (BO) and nylon self-locking nuts (NU) which hold the fingers (FI) and the bars (BA) through the symmetrical holes creating the finger elements (FB).

11. The CUHOM according to claim 1, 7 and 10, wherein the springs connecting each bar (BA) to the finger (FI) are adjusted so that the length of each partially compressed spring is the same for each spring in CUHOM ensuring that each bar (BA) is parallel to the finger (FI) when not compressed.

12. The CUHOM according to claim 1, 7, 10 and 11, wherein the bars (BA) achieve adaptive restrain of objects between the fingers (FI) depending on the thickness of the object they will hold through the springs (SP), so that the thicker the object, the greater the compression of the springs and the holding force exerted by the finger elements (FB) (according to the relation F = kx where F is the applied force, k is the spring constant and x is the displacement of the spring).

13. The CUHOM according to claim 1, wherein the pair of scissors (SC) makes cutting, simultaneously with the holding by means of the finger elements (FB), with appropriate adjustment of the length of the partially compressed springs (SP), so that when the finger elements (FB) close, the pair of scissors (SC) closes at the same time and cuts the object held between the finger elements (FB).

14. The CUHOM according to claim 1 and 4, wherein the fingers (FI) at their base (FIB) have symmetrical holes (FSH) to fit cutting scissors with suitable bolts (SB2) and nylon self-locking nuts (SN2) (or other connecting element), so that the complete closure of the fingers (FI) of CUHOM leads to complete closure of the cutting scissors (SC).

15. The CUHOM according to claim 1, 13 and 14, wherein the pair of scissors (FC) is connected to the bases of the symmetrical fingers (FIB) in parallel and at a distance as close as possible to the fingers (FI), so that the total height of the CUHOM at its end (EH) to be as small as possible, in order to achieve cutting at the shortest possible distance from the holding point.

16. The CUHOM according to claim 1, 6 and 15, wherein the minimum distance of the fingers (FI) from the pair of scissors (SC), defines the minimum height of the end of the CUHOM (minimum EH) and consequently the minimum length of the object the invention can hold and cut.
